Europäisches Patentamt

European Patent Office

Office européen des brevets

(11) Veröffentlichungsnummer : **0 014 438**
**B1**

(12) **EUROPÄISCHE PATENTSCHRIFT**

(45) Veröffentlichungstag der Patentschrift :
26.01.83

(51) Int. Cl.³ : **F 16 B 12/42**

(21) Anmeldenummer : **80100480.5**

(22) Anmeldetag : **31.01.80**

(54) **Eckverbindung für einen aus Hohlprofilabschnitten zusammensetzbaren Rahmen.**

(30) Priorität : **05.02.79 DEU 7903124**

(43) Veröffentlichungstag der Anmeldung :
**20.08.80 Patentblatt 80/17**

(45) Bekanntmachung des Hinweises auf die Patenterteilung : **26.01.83 Patentblatt 83/04**

(84) Benannte Vertragsstaaten :
**AT BE CH FR GB IT LU NL SE**

(56) Entgegenhaltungen :
**AT B 218 693**
**DE A 1 949 246**

(73) Patentinhaber : **Rittal-Werk Rudolf Loh GmbH & Co.
KG
Auf dem Stützelberg
D-6348 Herborn (DE)**

(72) Erfinder : **Lehr, Lothar
Dresselndorfer Strasse 16
D-5905 Burbach-Ober-Dresselndorf (DE)**
Erfinder : **Debus, Jürgen
Nord-West-Weg
D-6344 Dietzhölztal 4 (DE)**

(74) Vertreter : **Vogel, Georg
Auenweg 14
D-7141 Schwieberdingen (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Eckverbindung für einen aus Hohlprofilabschnitten zusammensetzbaren Rahmen

Die Erfindung betrifft eine Eckverbindung für einen aus Hohlprofilabschnitten zusammensetzbaren Rahmen, bei der ein Eckwinkel mit seinen Schenkeln in die Hohlräume der miteinander zu verbindenden Hohlprofilabschnitte eingeführt und mittels Spannelementen, die sich in Aufnahmen der Hohlprofilabschnitte und der Schenkel des Eckwinkels abstützen, unter Spannung gegen die Enden der Hohlprofilabschnitte verspannt ist.

Eine derartige Eckverbindung ist z.B. aus dem DE-U-73 33 552 bekannt. Bei dieser bekannten Eckverbindung sind die Eckwinkel mit Gewindebohrungen versehen, in die Klemmschrauben einführbar sind. Die Klemmschrauben sind als mit einem Innengewinde versehene Hohlschrauben ausgebildet, die in Aufnahmen der miteinander zu verbindenden Hohlprofilabschnitte abgestützt sind und in die mit einem Stützfuß versehene Andrückschrauben einführbar sind. Mit diesen Andrückschrauben wird der Eckwinkel quer zu den Längsachsen der Hohlprofilabschnitte verspannt. Mit dieser Verspannung ist aber nicht sichergestellt, daß die beiden Hohlprofilabschnitte mit ihren aufeinander treffenden Stoßflächen gegeneinander fugenlos verspannt sind.

Eine Verspannung der Hohlprofilabschnitte im Bereich ihrer aufeinander treffenden Stoßflächen wird bei einer Eckverbindung erreicht, wie sie in dem DE-U-19 58 354 gezeigt ist. Auch hier sind in dem Eckwinkel Gewindebohrungen vorgesehen, in die Spannschrauben einschraubbar sind. Die Spannschrauben weisen jedoch kegelstumpfförmige Köpfe auf, mit denen sie in Aufnahmen der Hohlprofilabschnitte geführt sind. Beim Anziehen der Spannschrauben werden die Hohlprofilabschnitte in Richtung der gebildeten Ecke verschoben und so im Bereich ihrer Stoßflächen fest miteinander verspannt.

Diese bekannte Eckverbindung erfordert jedoch einen teuren Eckwinkel mit Gewindebohrungen und spezielle Spannschrauben, die immer mehr oder weniger über die Wände der Hohlprofilabschnitte mit den Aufnahmen für die Köpfe der Spannschrauben vorstehen.

Aus der DE-A 1 949 246 sind derartige Eckverbindungen bekannt, bei denen Hohlprofile mittels Exzenterspanneinrichtungen an einem Eckwinkel festgeklemmt werden, wobei jedoch die konstruktive Ausführung aufwendig ist.

Es ist Aufgabe der Erfindung, eine Eckverbindung der eingangs erwänten Art so zu verbessern, daß unter Beibehaltung einer eindeutigen Verspannung der Hohlprofilabschnitte im Eckbereich ein Eckwinkel ohne Gewindebohrungen verwendet werden kann und daß die Spannelemente unabhängig von ihrer Spannstellung bündig in die zugeordneten Wände der Hohlprofilabschnitte mit den Aufnahmen für diese Spannelemente eingesetzt werden können.

Dies wird erfindungsgemäß dadurch erreicht, daß die Spannelemente als Spannexzenter ausgebildet sind, die mittels Führungsscheiben in den Aufnahmen der Hohlprofilabschnitte geführt und mit den Exzenterteilen zumindest auf den der Ecke abgekehrten Seiten an Spannflächen der Schenkel des Eckwinkels abgestützt sind.

Der Eckwinkel benötigt bei dieser Eckverbindung nur noch Spannflächen für die Exzenterteile der Spannexzenter, die bei der Herstellung der Eckwinkel ohne zusätzliche Arbeitsgänge angebracht werden können. Die Führungsscheiben der Spannexzenter sind bündig in die Aufnahmen der Hohlprofilabschnitte eingesetzt und verändern diese Stellung auch bei ihrer Verdrehung nicht, so daß die Aufnahmen durchaus an Stellen der Hohlprofilabschnitte eingebracht werden können, die später eine Dichtung, eine Scheibe, eine Platte oder dgl. aufnehmen.

In einfachster Weise lassen sich die Spannflächen für die Exzenterteile der Spannexzenter an dem Eckwinkel dadurch bilden, daß die Spannflächen durch quer zu den Längsachsen der Schenkel verlaufende Stege oder Nuten des Eckwinkels gebildet sind.

Für die Führung und Abstützung der Spannexzenter kann nach einer Ausgestaltung vorgesehen sein, daß die Führungsscheiben der Spannexzenter in als Bohrungen entsprechenden Durchmesser ausgebildeten Aufnahmen der Hohlprofilabschnitte gehalten sind und daß die Exzenterteile der Spannexzenter zwischen zwei quer zu den Längsachsen der Schenkel verlaufenden Stegen oder Nuten geführt sind.

Die Führung und die Abstützung der Spannexzenter können nach einer weiteren Ausgestaltung auch dadurch erreicht werden, daß die Führungsscheiben der Spannexzenter in quer zu den Längsachsen der Hohlprofilabschnitte verlaufenden, als Langlöcher ausgebildeten Aufnahmen geführt sind und daß die Exzenterteile in als Hülsen oder als Bohrungen ausgebildeten Aufnahmen der Schenkel des Eckwinkels gehalten sind.

Die Verdrehung der Spannexzenter wird dadurch erleichtert, daß die Führungsscheiben der Spannexzenter mit Werkzeugaufnahmen, z.B. mit Innensechskant, versehen sind.

Der Halt der Spannexzenter in den Aufnahmen der Hohlprofilabschnitte läßt sich nach einer Weiterbildung dadurch verbessern, daß die Führungsscheiben der Spannexzenter über Haltebunde in die Exzenterteile übergehen. Dabei ist zur besseren Einführung der Spannexzenter vorgesehen, daß die Aufnahmen in den Hohlprofilabschnitten als Schlüsselloch zur Einführung der Spannexzenter mit Haltebund ausgebildet sind.

Die Eckverbindung mit den erfindungsgemäßen Spannexzentern kann nach einer Ausgestaltung so ausgeführt sein, daß die Hohlprofilabschnitte auf Gehrung geschnitten und unmittelbar aufeinanderstoßend verspannt sind.

Die Ausgestaltung der Eckverbindung kann jedoch auch so ausgeführt sein, daß der Eckwinkel ein den Hohlprofilabschnitten entsprechendes Eckprofilteil aufweist und daß die quer zu ihren Längsachsen abgelängten Hohlprofilabschnitte gegen dieses Eckprofilteil verspannt sind.

Die Spannstellungen der Spannexzenter lassen sich nach einer Ausgestaltung dadurch festlegen, daß die Exzenterteile auf ihren Umfangsseiten mit einer Verzahnung versehen sind, bei der die Zähne und Zahnlücken parallel zur Mittelachse der Exzenterteile ausgerichtet sind. Die Verzahnungen drücken sich mehr oder weniger in die Spannflächen des Eckwinkels ein, so daß ein unbeabsichtigtes Lösen, d.h. Verdrehen, der Spannexzenter verhindert ist.

Die Spannexzenter können als billige Metallgußteile oder Metalldrehteile hergestellt werden.

Die Erfindung wird anhand von verschiedenen, in den Zeichnungen dargestellten Ausführungsbeispielen näher erläutert. Es zeigen :

Figur 1 in Explosionsdarstellung eine erfindungsgemäße Eckverbindung mit auf Gehrung geschnittenen Hohlprofilabschnitten,

Figur 2 im Querschnitt eine Spannstelle einer Eckverbindung mit anders gestaltetem Eckwinkel und

Figuren 3 und 4 in zwei verschiedenen Ansichten einen Eckwinkel mit einem Eckprofilteil zur Verbindung von zwei senkrecht zu ihren Längsachsen abgelängten Hohlprofilabschnitten.

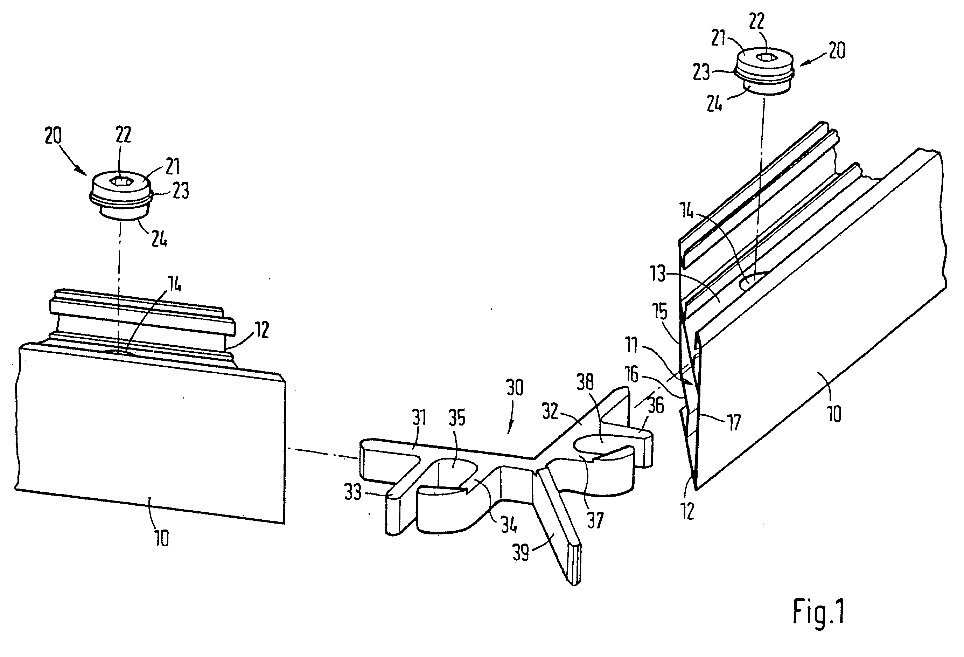

Die erfindungsgemäße Eckverbindung ist nicht auf bestimmte Querschnitte der Hohlprofilabschnitte beschränkt. Der Querschnitt der Hohlprofilabschnitte richtet sich nach dem Einsatz des zusammensetzbaren Rahmens. Wesentlich für die erfindungsgemäße Eckverbindung ist, daß die Hohlprofilabschnitte 10 einen Hohlraum 11 aufweisen, wie Figur 1 zeigt. Dabei ist es durchaus möglich, daß dieser Hohlraum auch einseitig offen ist, er muß nur so beschaffen sein, daß darin ein Schenkel des zur Verbindung vorgesehenen Eckwinkels 30 quer zur Längsachse des Hohlprofilabschnittes 10 nicht verschiebbar ist.

Die beiden miteinander zu verbindenden Hohlprofilabschnitte 10 nach Figur 1 sind auf Gehrung geschnitten, wie die im Winkel von 45° stehenden Stoßflächen 12 zeigen. Der Eckwinkel 30 wird mit seinen Schenkeln 31 und 32 in die Hohlräume 11 der Hohlprofilabschnitte 10 eingesteckt. Dabei stützen sich die Schenkel 31 und 32 an den Wänden 13, 15 und 16 ab, während die quer verlaufenden Stege 33, 34 bzw. 36 und 37 an der Wand 17 abstützen. Der diagonal gerichtete Steg 39 stützt sich im Bereich der Stoßflächen 12 an der Wand 17 ab. Auf diese Weise ist der Eckwinkel 30 in beiden Hohlprofilabschnitten 10 nicht mehr quer zu den Längsachsen der Hohlprofilabschnitte 10 verstellbar. Die im rechten Winkel zueinander stehenden Hohlprofilabschnitte 10 können jedoch noch gegeneinander bewegt und verspannt werden. Um diese Verspannung ausführen zu können, sind in der Wand 13 der Hohlprofilabschnitte 10 als Bohrungen ausgebildete Aufnahmen 14 eingebracht. In diese Bohrungen werden Spannexzenter 20 eingesetzt.

Diese Spannexzenter 20 sind mit ihren Führungsscheiben 21 in den Aufnahmen 14 verdrehbar geführt. Die Führungsscheiben 21 sind stirnseitig mit einem Innensechskant 22 als Werkzeugaufnahme versehen, die das Verdrehen der Spannexzenter 20 ermöglicht. Die Führungsscheiben 21 gehen über Haltebunde 23 in Exzenterteile 24 über, die mit ihren Mittelachsen um einen vorgegebenen Betrag gegenüber den Mittelachsen der Führungsscheiben 21 versetzt sind. Die Aufnahmen 14 sind als Schlüsselloch ausgebildet, so daß die Spannexzenter 20 mit dem Haltebund 23 eingeführt und an den Hohlprofilabschnitten 10 gehalten werden können. Die Exzenterteile 24 der Spannexzenter 20 ragen in die Queraufnahmen 35 und 38 des Eckwinkels 30, die durch die Stegpaare 33 und 34 bzw. 36 und 37 gebildet werden. Die Anordnung der Aufnahmen 14 in den Hohlprofilabschnitten 10 und der Aufnahmen 35 und 38 in dem Eckwinkel 30 ist in Verbindung mit der Ausbildung der Spannexzenter 20 so gewählt, daß durch Verdrehung der Spannexzenter 20 und der dabei auftretenden Abstützung der Exzenterteile 24 an den Stegen 33 und 36 die Hohlprofilabschnitte 10 im Bereich ihrer Stoßflächen 12 verspannt werden. Der Gegendruck wird von den Führungsscheiben 21 der Spannexzenter 20 auf die Wandungen der Aufnahmen 14 und damit auf die Hohlprofilabschnitte 10 übertragen und zwar auf den den Stoßflächen 12 zugekehrten Seiten. Auf diese Weise lassen sich die Stoßflächen 12 unter Spannung fugenlos miteinander verbinden. Die Führungsscheiben 21 schließen bündig mit den Außenseiten der Wände 13 der Hohlprofilabschnitte 10 ab, so daß das Einbringen von Dichtungselementen, Scheiben oder dgl. in die anschließenden Außennuten der Hohlprofilabschnitte nicht beeinträchtigt ist.

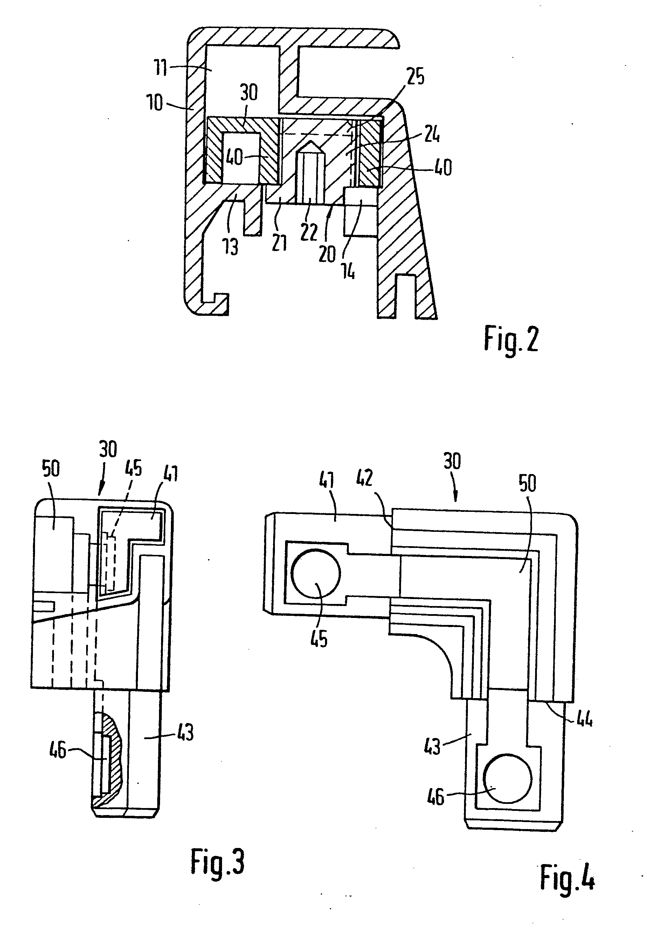

Figur 2 zeigt im Schnitt eine andersartige Führung und Abstützung des Spannexzenters 20. Die Aufnahme 14 in der Wand 13 des Hohlprofilabschnittes 10 ist als Langloch ausgebildet, das quer zur Längsachse des Hohlprofilabschnittes verläuft. Die Breite des Langloches entspricht dem Durchmesser der Führungsscheibe 21 des Spannexzenters 20, die diesmal direkt in das Exzenterteil 24 übergeht. Das Exzenterteil 24 ragt in eine Spannhülse 40 des Eckwinkels 30, die mit ihrer Innenaufnahme auf den Außendurchmesser des Exzenterteils 24 abgestimmt ist. Auf dem Außenumfang ist das Exzenterteil 24 mit einer Verzahnung 25 versehen, deren Zähne und Zahnlücken parallel zur Mittelachse des Exzenterteiles 24 ausgerichtet sind. Bei einer Verdrehung des Spannexzenters 20 wird die Führungsscheibe 21 in der als Langloch ausgebildeten Aufnahme 14 quer zum Hohlprofilabschnitt 10 verstellt. Das Exzenterteil 24 des Spannexzenters 20 überträgt dabei eine in der Längsachse des Hohlprofilabschnittes 10 verlaufende Stellbewegung auf den Eckwinkel 30. Die Verzahnung 25 stützt sich dabei an der der Stoßfläche abgekehrten Seite an der Spannhülse 40 ab. Die Zähne der Verzahnung 25 verkrallen sich mehr oder weniger an der Spannhülse 40 und stellen so sicher, daß sich die eingestellte Stellung des Spannexzenters 20 nicht unbeabsichtigt wieder löst.

In den Ansichten nach Figur 3 und 4 ist ein Eckwinkel 30 gezeigt, der ein Eckprofilteil 50 aufweist, welches im Querschnitt dem Querschnitt der Hohlprofilabschnitte 10 entspricht und die Ecke der quer zu den Längsachsen abgelängten Hohlprofilabschnitte 10 vervollständigt. Die Stoßflächen 12 der Hohlprofilabschnitte 10 werden gegen die Absätze 42 und 44 zwischen dem Eckprofilteil 50 und den Schenkeln 41 und 43 des Eckwinkels 30 verspannt. Die Spannexzenter 20, wie sie in Figur 2 eingesetzt sind, werden wieder in als quer zu den Längsachsen der Hohlprofilabschnitte 10 verlaufenden Langlöchern geführt und ragen mit ihren Exzenterteilen 24 in die als Sackbohrungen 45 und 46 in die Schenkel 41 und 43 des Eckwinkels 30 eingebrachten Aufnahmen. Die Schenkel 41 und 43 sind im Querschnitt wieder an den Querschnitt der Hohlräume der miteinander verbindenden Hohlprofilabschnitte angepaßt.

## Ansprüche

1. Eckverbindung für einen aus Hohlprofilabschnitten (10) zusammensetzbaren Rahmen, bei der ein Eckwinkel (30) mit seinen Schenkeln (31, 32, 41, 43) in die Hohlräume (11) der miteinander zu verbindenden Hohlprofilabschnitte (10) eingeführt und mittels Spannelementen (20), die sich in Aufnahmen (14, 45, 46) der Hohlprofilabschnitte (10) und der Schenkel (31, 32, 41, 43) des Eckwinkels (30) abstützen, unter Spannung gegen die Enden der Hohlprofilabschnitte (10) verspannt ist, dadurch gekennzeichnet, daß die Spannelemente als Spannexzenter (20) ausgebildet sind, die mittels Führungsscheiben (21) in den Aufnahmen (14) der Hohlprofilabschnitte (10) geführt und mit den Exzenterteilen (24) zumindest auf den der Ecke abgekehrten Seiten an Spannflächen der Schenkel (31, 32 bzw. 41, 43) des Eckwinkels (30) abgestützt sind.

2. Eckverbindung nach Anspruch 1, dadurch gekennzeichnet, daß die Spannflächen durch quer zu den Längsachsen der Schenkel (31, 32) verlaufende Stege (33, 36) oder Nuten des Eckwinkels (30) gebildet sind.

3. Eckverbindung nach Anspruch 1 und 2, dadurch gekennzeichnet, daß die Führungsscheiben (21) der Spannexzenter (20) in als Bohrungen entsprechenden Durchmessers ausgebildeten Aufnahmen (14) der Hohlprofilabschnitte (10) gehalten sind und daß die Exzenterteile (24) der Spannexzenter (20) zwischen zwei quer zu den Längsachsen der Schenkel (31, 32) verlaufenden Stegen (33, 34 bzw. 36, 37) oder Nuten geführt sind.

4. Eckverbindung nach Anspruch 1 dadurch gekennzeichnet, daß die Führungsscheiben (21) der Spannexzenter (20) in quer zu den Längsachsen der Hohlprofilabschnitte (10) verlaufenden als Langlöchern ausgebildeten Aufnahmen (14)

geführt sind und daß die Exzenterteile (24) in als Hülsen (40) oder als Bohrungen (45, 46) ausgebildeten Aufnahmen der Schenkel (41, 43) des Eckwinkels (30) gehalten sind.

5. Eckverbindung nach einem der Ansprüche 1 bis 4, dadurch gekennzeichnet, daß die Führungsscheiben (21) der Spannexzenter (20) mit Werkzeugaufnahmen, z.B. mit Innensechskant (22), versehen sind.

6. Eckverbindung nach einem der Ansprüche 1 bis 5, dadurch gekennzeichnet, daß die Führungsscheiben (21) der Spannexzenter (20) über Haltebunde (23) in die Exzenterteile (24) übergehen.

7. Eckverbindung nach einem der Ansprüche 1 bis 6, dadurch gekennzeichnet, daß die Hohlprofilabschnitte (10) auf Gehrung (12) geschnitten und unmittelbar aufeinanderstoßend verspannt sind.

8. Eckverbindung nach einem der Ansprüche 1 bis 6, dadurch gekennzeichnet, daß der Eckwinkel (30) ein den Hohlprofilabschnitten (10) entsprechendes Eckprofilteil (50) aufweist und daß die quer zu ihren Längsachsen abgelängten Hohlprofilabschnitte (10) gegen dieses Eckprofilteil (50) verspannt sind.

9. Eckverbindung nach einem der Ansprüche 1 bis 8, dadurch gekennzeichnet, daß die Exzenterteile (24) auf ihren Umfangsseiten mit einer Verzahnung (25) versehen sind, bei der die Zähne und Zahnlücken parallel zur Mittelachse der Exzenterteile (24) ausgerichtet sind.

10. Eckverbindung nach Anspruch 6, dadurch gekennzeichnet, daß die Aufnahmen (14) in den Hohlprofilabschnitten (10) als Schlüsselloch zur Einführung der Spannexzenter (20) mit Haltebund (23) ausgebildet sind.

11. Eckverbindung nach einem der Ansprüche 1 bis 10, dadurch gekennzeichnet, daß die Spannexzenter (20) als Metallgußteil oder Metalldrehteil ausgebildet sind.

## Claims

1. Corner joint for a frame to be fitted together with hollow profile sections (10), for which a corner angle-iron (30) is inserted by means of its legs (31, 32, 41, 43) into the cavities (11) of the hollow profile sections (10), which are to be connected with one another, and secured in place under tension against the ends of the hollow profile sections (10) by means of clamping elements (20) supported in reception holes (14, 45, 46) of the hollow profile sections (10) and of the legs (31, 32, 41, 43) of the corner angle-iron (30), characterized by the fact that the clamping elements are designed as clamping eccentrics (20) held in the reception holes (14) of the hollow profile sections (10) by means of guiding disks (21) and supported with the eccentric parts (24), at least at the sides away from the corner, at clamping faces of the corner angle-iron (30) legs (31, 32 or 41, 43).

2. Corner joint according to claim 1, characterized by the fact that the clamping faces are produced by webs (33, 36) running at right angles to the longitudinal axes of the legs (31, 32) or by grooves of the corner angle-iron (30).

3. Corner joint according to claims 1 and 2, characterized by the fact that the guiding disks (21) of the clamping eccentrics (20) are held in reception holes (14) of the hollow profile sections (10) designed as bores of corresponding diameters and that the eccentric parts (24) of the clamping eccentrics (20) are held between two webs (33, 34 or 36, 37) or grooves running at right angles to the longitudinal axes of the legs (31, 32).

4. Corner joint according to claim 1, characterized by the fact that the guiding disks (21) of the clamping eccentrics (20) are supported in reception holes (14) designed as oblong holes running at right angles to the longitudinal axes of the hollow profile sections (10) and that the eccentric parts (24) are held in reception holes of the corner angle-iron (30) legs (41, 43) designed as sleeves (40) or bores (45, 46).

5. Corner joint according to one of the claims 1 to 4, characterized by the fact that the guiding disks (21) of the clamping eccentrics (20) are provided with tool holes, e.g. with hexagon socket (22).

6. Corner joint according to one of the claims 1 to 5, characterized by the fact that the guiding disks (21) of the clamping eccentrics (20) turn into the eccentric parts (24) over retaining collars (23).

7. Corner joint according to one of the claims 1 to 6, characterized by the fact that the hollow profile sections (10) are mitred and tightly joined together without any gaps.

8. Corner joint according to one of the claims 1 to 6, characterized by the fact that the corner angle-iron (30) has an angle-section part (50) corresponding to the hollow profile sections (10) and that the hollow profile sections (10) cut to length at right angles to their longitudinal axes are secured in place against this angle-section part (50).

9. Corner joint according to one of the claims 1 to 8, characterized by the fact that the circumferential sides of the eccentric parts (24) are provided with a tooth system (25), the teeth and tooth gaps of which are parallelized to the middle axis of the eccentric parts (24).

10. Corner joint according to claim 6, characterized by the fact that the reception holes (14) in the hollow profile sections (10) are designed as keyholes for inserting the clamping eccentrics (20) with retaining collar (23).

11. Corner joint according to one of the claims 1 to 10, characterized by the fact that the clamping eccentrics (20) are designed as metal casting or turned metal part.

## Revendications

1. Assemblage d'angle pour un cadre composé des tronçons de profilés creux (10) pour lequel une cornière d'angle (30) est mise en place par ses côtés (31, 32, 41, 43) aux cavités (11) des profilés creux (10) à relier et coincée sous tension contre les bouts des profilés creux à l'aide des éléments de serrage (20) supportés dans les trous de réception (14, 45, 46) des profilés creux (10) et des côtés (31, 32, 41, 43) de la cornière d'angle (30), caractérisé par le fait que les éléments de serrage sont façonnés comme excentriques de serrage (20) guidés dans les trous de réception (14) des profilés creux (10) à l'aide des disques de guidage (21) et supportés avec les parties excentriques (24), du moins des côtés opposés au coin, à surfaces de serrage des côtés (31, 32 ou 41, 43) de la cornière d'angle (30).

2. Assemblage d'angle d'après la revendication 1, caractérisé par le fait que les surfaces de serrage sont formées par des arêtes (33, 36) ou des rainures de la cornière d'angle (30) courant transversalement aux axes longitudinaux des côtés (31, 32).

3. Assemblage d'angle d'après les revendications 1 et 2, caractérisé par les faits que les disques de guidage (21) des excentriques de serrage (20) sont tenus dans des trous de réception (14) des profilés creux (10) façonnés comme forures de diamètres correspondants et que les parties excentriques (24) des excentriques de serrage (20) sont guidées entre deux arêtes (33, 34 ou 36, 37) ou rainures courant transversalement aux axes longitudinaux des côtés (31, 32).

4. Assemblage d'angle d'après la revendication 1, caractérisé par le fait que les disques de guidage (21) des excentriques de serrage (20) sont guidés dans des trous de réception (14) façonnés comme des trous longitudinaux courant transversalement aux axes longitudinaux des profilés creux (10) et que les parties excentriques (24) sont tenues dans des trous de réception des côtés (41, 43) de la cornière d'angle (30) façonnés comme douilles (40) ou forures (45, 46).

5. Assemblage d'angle d'après l'une des revendications 1 à 4, caractérisé par le fait que les disques de guidage (21) des excentriques de serrage (20) sont pourvus des perçages à réception d'outils, p.e. des six pans creux (22).

6. Assemblage d'angle d'après l'une des revendications 1 à 5, caractérisé par le fait que les disques de guidage (21) des excentriques de serrage (20) tournent en parties excentriques (24) en passant par des collets de retenue (23).

7. Assemblage d'angle d'après l'une des revendications 1 à 6, caractérisé par le fait que les tronçons de profilés creux (10) sont sciés en onglet et coincés jointivement.

8. Assemblage d'angle d'après l'une des revendications 1 à 6, caractérisé par le fait que la cornière d'angle (30) présente une pièce cornière (50) correspondant aux profilés creux (10) et que les profilés creux (10) tronçonnés transversalement à leurs axes longitudinaux sont coincés contre cette pièce cornière (50).

9. Assemblage d'angle d'après l'une des revendications 1 à 8, caractérisé par le fait que les circonférences des parties excentriques (24) sont pourvues d'une denture (25) les dents et entre-dents de laquelle sont alignés parallèlement à l'axe central des parties excentriques (24).

10. Assemblage d'angle d'après la revendication 6, caractérisé par le fait que les trous de réception (14) dans les profilés creux (10) sont façonnés comme trous de serrure pour la mise en place des excentriques de serrage (20) avec collet de retenue (23).

11. Assemblage d'angle d'après l'une des revendications 1 à 10, caractérisé par le fait que les excentriques de serrage (20) sont façonnés comme pièces coulées ou pièces tournées en métal.

Fig.1

0 014 438

Fig.2

Fig.3

Fig.4